# EUROPEAN PATENT APPLICATION

(11) **EP 3 988 232 A1**
(43) Date of publication of application: **27.04.2022**
(21) Application number: 19933248.7
(22) Date of filing: 20.06.2019
(51) Int. Cl.: B23B 51/06, B23B 51/00, B23B 51/02

(54) **CUTTING TOOL**

(71) Applicant: OSG Corporation, Aichi 442-0005 (JP)
(72) Inventor: OSAWA, Jiro, Toyokawa-shi, Aichi 441-1231 (JP); YODA, Tomonori, Toyokawa-shi, Aichi 441-1231 (JP)
(74) Representative: Epping - Hermann - Fischer
(86) International application number: PCT/JP2019/024400
(87) International publication number: WO 2020/255315

(57) **Abstract**

A drill (1) is provided with a body (10) and a head (30). The body (10) is formed of cemented carbide, and the head (30) is formed of PCD. Spiral coolant passages (17, 18) are provided inside the body (10). Oil holes (25, 26) are provided in a body-side joint surface of the body (10). The oil holes (25, 26) are outlets of the coolant passages (17, 18). Coolant passages (37, 38) provided inside the head (30) extend from oil holes (45, 46) provided at a tip (31) toward a rear end (32). A head-side joint surface of the head (30) is joined to the body-side joint surface. Two oil holes are provided in the head-side joint surface. The two oil holes are inlets of the coolant passages (37, 38), and communicate with the oil holes (25, 26) in the body-side joint surface.

## Description

### Technical Field

The present invention relates to a cutting tool.

### Background Art

A rotary cutting tool described in Patent Literature 1 is provided with a cylindrical main body and a nib portion. The main body is formed of a carbide material and includes a first end portion and a second end portion. The first end portion is configured to be able to cut a work material. The second end portion is configured to be mounted on a drive shaft of a machine tool. In an outer peripheral surface of the main body, a plurality of flutes are formed in a spiral shape centered on a longitudinal axis line of the main body. A plurality of coolant passages are provided in the interior of the main body. The plurality of coolant passages are formed in a spiral shape centered on the longitudinal axis line of the main body from a first opening formed in the first end portion of the main body to a second opening formed in the second end portion of the main body. A groove portion is formed in the first end portion of the main body, and is disposed in a horizontal direction with respect to the longitudinal axis line. The nib portion is provided with a base portion and a coated portion. The base portion is formed of a carbide material. The coated portion is formed of polycrystalline diamond (PCD), and is deposited on the base portion. The nib portion is inserted into the groove portion and brazed.

### Citation List

### Patent Literature

Patent Literature 1: Japanese Laid-Open Patent Publication No. 2012-250343

### Summary of Invention

In order to make the nib portion thicker, it is necessary to increase a width of the groove formed in the first end portion. When the groove width is increased, a region at the second end of the main body other than the groove becomes narrower, and it is difficult to provide the second opening. Further, when the groove width is increased, there is also a problem that the torsion of the spiral shape of the flutes formed in the main body cannot be strengthened. Further, when the groove width is increased, there is also a problem that a contact area between the nib portion and a groove inner surface is reduced, and an adhesion strength of the nib portion with respect to the groove is weakened.

It is an object of the present invention to provide a cutting tool able to discharge a coolant from a tip of a head formed of PCD.

The cutting tool of the present invention is a cutting tool including a rod-shaped body which is formed of cemented carbide and a head which is formed of polycrystalline diamond, is joined to the tip of the body, and a tip of which includes a cutting edge, a groove portion extending in a spiral shape centering on an axis line being formed in an outer peripheral surface of the cutting tool. The cutting tool includes: a first coolant passage provided in the interior of the body and extending in a spiral shape centering on the axis line from a rear end of the body toward the tip; a first oil hole provided in a body-side joint surface provided on the tip of the body, the first oil hole being an outlet of the first coolant passage; a second coolant passage provided in the interior of the head and extending from an opening provided in the tip of the head toward the rear end; and a second oil hole provided in a head-side joint surface, which is the rear end of the head and which is joined to the body-side joint surface, the second oil hole being an inlet of the second coolant passage, and communicating with the first oil hole of the body-side joint surface.

According to the cutting tool of the present aspect, the entire head is formed of PCD, and thus, the PCD can be reliably caused to come into contact with a work material. Thus, the cutting tool can process the work material with a high degree of accuracy, and is optimal for finishing processing in particular. In a state in which the head-side joint surface is joined to the body-side joint surface, the second oil hole communicates with the first oil hole. Thus, the coolant that has flowed through the first coolant passage flows into the second coolant passage via the second oil hole and the first oil hole. The coolant that has flowed into the second coolant passage is discharged toward the work material from an opening provided in the tip of the head. Heat is generated when the PCD head processes the work material, but the cutting tool can favorably supply the coolant toward a contact point with the work material, and can thus favorably cut the work material.

Note that, in manufacturing steps of the cutting tool, when forming the second coolant passage in the head, an operator, for example, in the state in which the head-side joint surface is joined to the body-side joint surface, may set the first oil hole of the body-side joint surface as a reference position, from the tip of the head, and may form the second coolant passage using electric discharge processing, laser processing, or the like. Thus, in the head-side join surface, the operator can form the second oil hole in a suitable position communicated with the first oil hole of the body-side joint surface. Further, the cutting tool can be provided with the spiral groove portion in the spiral shape from the tip of the PCD head and centering on the axis line, and thus, a torsion angle of the groove portion can be freely designed while taking a flow of chips generated during the processing of the work material into account.

The second coolant passage of the cutting tool according to the present aspect may be formed in a straight line inclined with respect to the axis line, so as to follow a twisting direction of the groove portion. Thus, the cutting tool can secure a wall thickness of a minimum distance between the groove portion and the second coolant passage. The minimum distance means a lowest limit distance required to secure a certain rigidity or above for the head.

In the cutting tool of the present aspect, a bonding layer formed of silver braze may be provided between the body-side joint surface and the head-side joint surface. Since the body-side joint surface and the head-side joint surface are joined by the silver braze, the PCD head can be strongly fixed to the tip of the cemented carbide body.

In the cutting tool of the present aspect, one of the body-side joint surface and the head-side joint surface may be provided with a recessed portion recessed to an inner side, and the other of the body-side joint surface and the head-side joint surface may be provided with a convex portion fitting into the recessed portion. Thus, the cutting tool can strongly fix the head to the body. Further, in the present aspect, positioning of the head with respect to the body is easy, and thus, a fixing operation of the body and the head can be efficiently performed.

### Brief description of Drawings

Fig. 1 is a perspective view of a drill 1.
Fig. 2 is an exploded perspective view of the drill 1.
Fig. 3 is an exploded perspective view of the drill 1 as seen from a different angle to Fig. 2.
Fig. 4 is a view of a body 10 as seen from a leading end side in an axis line direction.
Fig. 5 is a view of a head 30 as seen from a leading end side in an axis line direction.
Fig. 6 is a perspective view showing the interior of the drill 1.
Fig. 7 is a perspective view showing the interior of the head 30.
Fig. 8 is a flow of a manufacturing process of a PCD drill.
Fig. 9 is a perspective view of a drill 70 (a modified example).

### Description of Embodiments

Hereinafter, an embodiment of the present invention will be explained. Insofar as there is no particular description, a shape of a drill 1 to be described below is not intended to be limited thereto, and is simply a descriptive example. The drawings are used for explaining technological features that can be employed by the present invention.

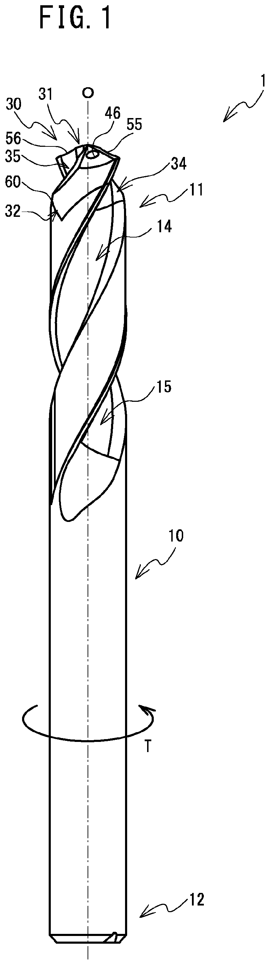

An overall structure of the drill 1 will be explained. The drill 1 shown in Fig. 1 is an example of a cutting tool, and is a tool that performs drilling processing in a work material (not shown in the drawings). The drill 1 is a double-edged blade, and is provided with a body 10 and a head 30. The body 10 is formed in a substantially cylindrical shape. The head 30 is formed in a substantially short cylindrical shape, and is joined to a tip 11 of the body 10 by brazing, for example. A bonding layer 60 is formed between the body 10 and the head 30. A main component of the bonding layer 60 is silver braze.

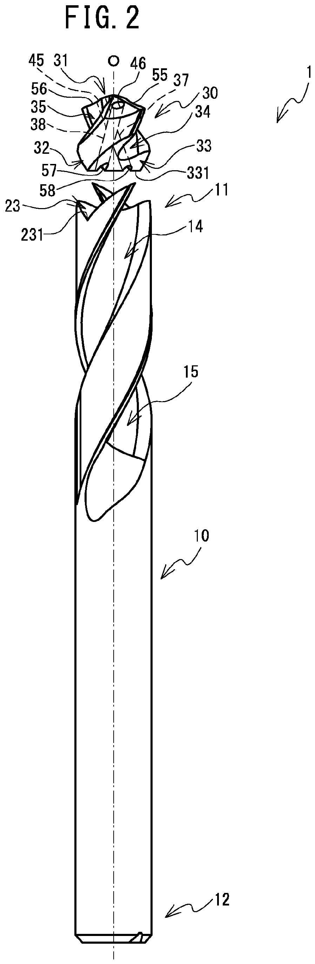

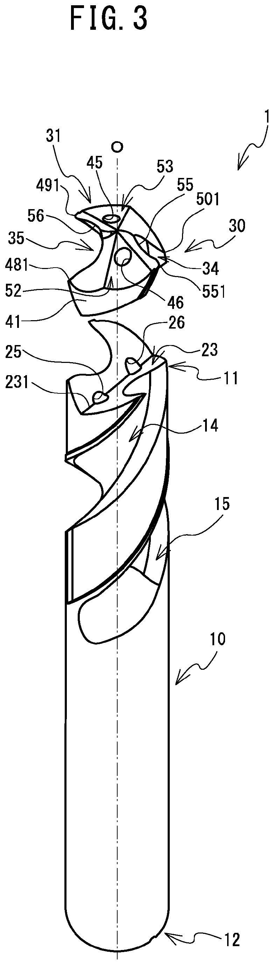

The shape of the body 10 will be explained. As shown in Fig. 2 and Fig. 3, the body 10 is formed of a cemented carbide, and is provided with the tip 11 and a rear end 12. The rear end 12 is fixed to a tool holder that is not shown in the drawings. The tool holder supports the rear end 12 of the body 10 of the drill 1, and is mounted on a drive shaft of a machine tool that is not shown in the drawings, and driven to rotate. Two discharge groove portions 14 and 15 are provided in the outer peripheral surface of the body 10. The discharge groove portions 14 and 15 are provided in positions facing each other on either side of an axis line O, and extend in a spiral shape centered on the axis line O, from the tip 11 as far as a central portion in a longitudinal direction. Helix angles of each of the discharge groove portions 14 and 15 are the same. The helix angle is an angle with respect to the axis line O. The discharge groove portions 14 and 15 are twisted, with respect to the axis line O, from the rear end 12 side toward the tip 11 side, in a clockwise direction as seen from the rear end 12 side. A portion of the body 10 on the leading end side has a shape that is twisted around the axis line O as a result of the discharge groove portions 14 and 15.

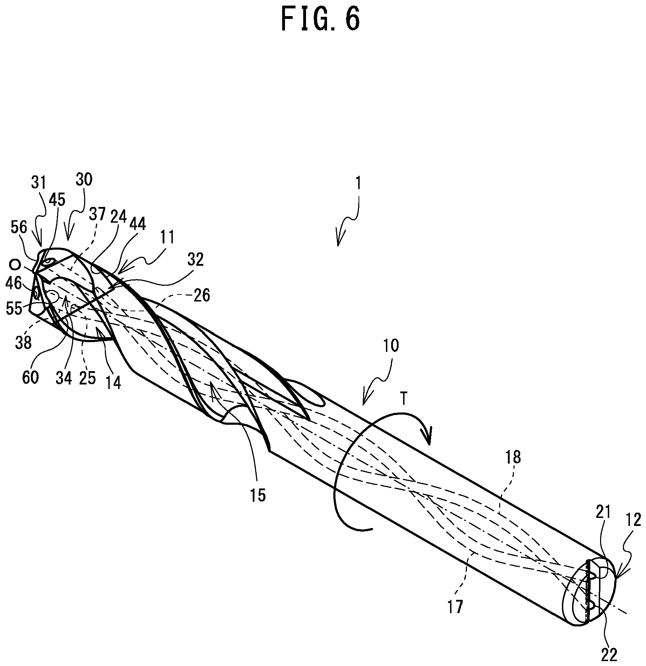

As shown in Fig. 6, two coolant passages 17 and 18 are provided in the interior of the body 10. The coolant passages 17 and 18 are provided at positions facing each other on either side of the axis line O. The coolant passages 17 and 18 extend in a spiral shape centered on the axis line O, from the rear end 12 toward the tip 11. Helix angles of each of the coolant passages 17 and 18 are the same. A coolant that is supplied from outside flows through the coolant passages 17 and 18 from the rear end 12 toward the tip 11. Two oil holes 21 and 22, which are aligned in a radial direction on either side of the axis line O at the center thereof, are provided in the rear end 12. The oil holes 21 and 22 are inlets of the coolant passages 17 and 18.

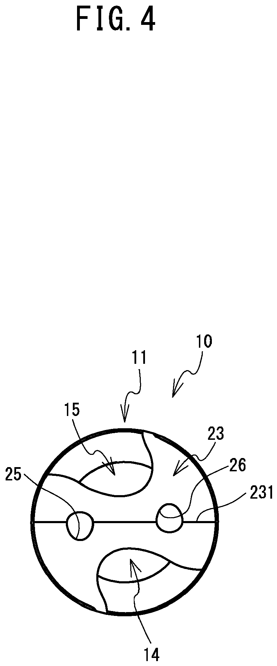

As shown in Fig. 3 and Fig. 4, a body-side joint surface 23 is provided on the tip 11 of the body 10. The body-side joint surface 23 is formed to be recessed to an inner side in a substantially V shape in a side view. Thus, the body-side joint surface 23 as a whole forms a recessed portion. A bottom portion 231 of the body-side joint surface 23 is formed along a central line passing through a central portion in the radial direction. Two oil holes 25 and 26, which are aligned on the bottom portion 231 on either side of the axis line O in the center thereof, are provided in the body-side joint surface 23. The oil holes 25 and 26 are outlets of the coolant passages 17 and 18.

A shape of the head 30 will be explained. As shown in Fig. 2 and Fig. 3, the head 30 is formed of polycrystalline diamond (PCD), and is provided with a tip 31 and a rear end 32. A head-side joint surface 33 (refer to Fig. 2) is provided on the rear end 32. The head-side joint surface 33 is formed protruding to the body 10 side in a substantially reverse V shape in a side view. A ridge line 331 thereof is formed along a central line passing through a central portion of the head-side joint surface 33 in the radial direction. A shape of the head-side joint surface 33 corresponds to the shape of the body-side joint surface 23 of the body 10. Thus, the head-side joint surface 33 is closely adhered to the body-side joint surface 23 (refer to FIG. 1). The head-side joint surface 33 is joined to the body-side joint surface 23 by brazing using a silver braze.

As shown in Fig. 2, Fig. 3, and Fig. 5, two discharge groove portions 34 and 35 are provided in the outer peripheral surface of the head 30. The discharge groove portions 34 and 35 are provided on opposite sides from each other, on either side of the axis line O, and extend in a spiral shape centered on the axis line O from the tip 31 to the rear end 32. Helix angles of each of the discharge groove portions 34 and 35 are the same, and are the same as the helix angles of the discharge groove portions 34 and 35 of the body 10. In a similar manner to the discharge groove portions 14 and 15 of the body 10, the discharge groove portions 34 and 35 are twisted, with respect to the axis line O, from the rear end 32 side toward the tip 31 side, in a clockwise direction as seen from the rear end 12 side. The head 30 has a shape that is twisted around the axis line O as a result of the discharge groove portions 34 and 35. In a state in which the head-side joint surface 33 of the head 30 is joined to the body-side joint surface 23 of the body 10, rear ends of the discharge groove portions 34 and 35 are respectively connected to and communicate with tips of the discharge groove portions 14 and 15 of the body 10 (refer to FIG. 1 and Fig. 6).

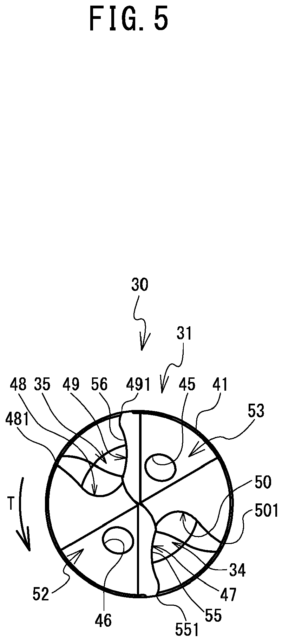

As shown in Fig. 5, the discharge groove portions 34 and 35 open in the tip 31, and two cutting edges 55 and 56 are formed on those opening portions. The drill 1 cuts the work material using the cutting edges 55 and 56 by rotating around the axis line O, and forms a hole while discharging chips using the discharge groove portions 34, 35, 14, and 15. A rotation direction T of the drill 1 during processing is the counterclockwise direction as seen from the leading end side in the axis line direction.

The cutting edge 55 is formed on a ridge line portion at which, of an inner face of the discharge groove portion 34, an inner face 47, which is oriented toward the rotation direction T side, intersects a flank 52 of the tip 31. The inner face 47 of the discharge groove portion 34 is a rake face, and picks up chips cut by the cutting edge 55 and causes the chips to flow to the discharge groove portion 34. A leading edge 551 is formed at a portion at which the inner face 47 of the discharge groove portion 34 and an outer peripheral surface 41 of the head 30 intersect each other. Aback edge 481 is formed on a portion at which, of an inner face of the discharge groove portion 35, an inner face 48, which is oriented toward the opposite side to the rotation direction T side, intersects the outer peripheral surface 41.

The cutting edge 56 is formed on a ridge line portion at which, of the inner face of the discharge groove portion 35, an inner face 49, which is oriented in the rotation direction T, intersects a flank 53 of the tip 31. The inner face 49 of the discharge groove portion 35 is a rake face and picks up chips cut by the cutting edge 56 and causes the chips to flow to the discharge groove portion 35. A leading edge 491 is formed at a portion at which the inner face 49 of the discharge groove portion 35 and the outer peripheral surface 41 of the head 30 intersect each other. Aback edge 501 is formed on a portion at which, of an inner face of the discharge groove portion 34, an inner face 50, which is oriented toward the opposite side to the rotation direction T side, intersects the outer peripheral surface 41.

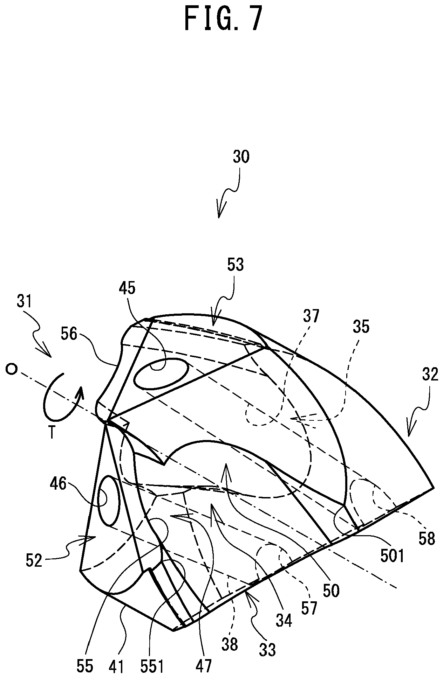

Two coolant passages 37 and 38 (refer to Fig. 2, Fig. 6, and Fig. 7) are provided in the interior of the head 30. Two oil holes 57 and 58 (refer to Fig. 2) are provided in the head-side joint surface 33 of the rear end 32. The oil holes 57 and 58 are provided so as to be aligned on the ridge line 331 in positions either side of the axis line O. The oil hole 57 is an opening of the coolant passage 38, and the oil hole 58 is an opening of the coolant passage 37. As shown in Fig. 5, two oil holes 45 and 46 are provided in the tip 31. The oil hole 45 is provided in the flank 53, and the oil hole 46 is provided in the flank 52. The oil hole 45 is an outlet of the coolant passage 37, and the oil hole 46 is an outlet in the coolant passage 38.

As shown in Fig. 2, the coolant passage 37 is formed in a straight line that is inclined with respect to the axis line O of the head 30, along the direction in which the discharge groove portion 34 twists from the oil hole 58 provided in the head-side joint surface 33 of the rear end 32. The coolant passage 38 is formed in a straight line that is inclined with respect to the axis line O of the head 30, along the direction in which the discharge groove portion 35 twists from the oil hole 57 provided in the head-side joint surface 33 of the rear end 32. In this way, the coolant passages 37 and 38 are the straight lines that follow the twisted shape of the discharge groove portions 34 and 35, and thus, it is possible to secure a minimum distance for a wall thickness between the coolant passage 37 and the discharge groove portion 34, and between the coolant passage 38 and the discharge groove portion 35, respectively. Note that the minimum distance means a lowest limit distance required to secure a certain rigidity or above for the head 30, and is determined, for example, by experimentation.

In the state in which the head-side joint surface 33 of the head 30 is joined to the body-side joint surface 23 of the body 10, the oil holes 57 and 58 of the head-side joint surface 33 are connected to and communicate with the oil holes 25 and 26 of the body-side joint surface 23 (refer to Fig. 4 and Fig. 6).

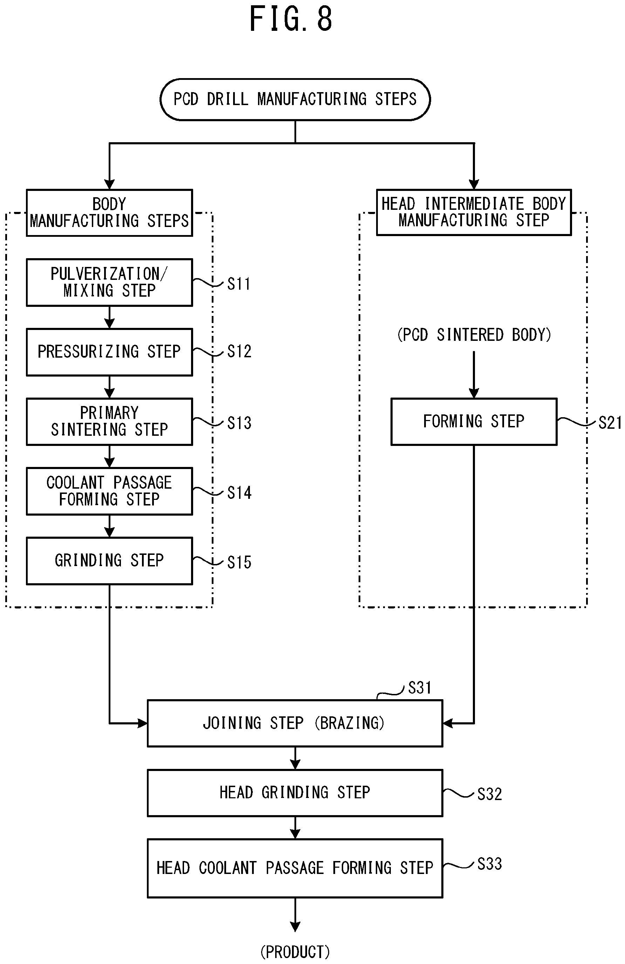

An example of a manufacturing method of the drill 1 will be explained with reference to Fig. 8. A PCD drill manufacturing method includes body manufacturing steps and a head intermediate body manufacturing step. In the present embodiment, the head intermediate body is an intermediate body of the head 30 in a manufacturing process of the head 30. The head intermediate body is a PCD sintered body that is provided with the head-side joint surface 33 of the rear end 32, but in which the discharge groove portions 34 and 35, the coolant passages 37 and 38, the cutting edges 55 and 56, and the like, are not formed.

In the body manufacturing steps, a pulverization/mixing step (step S11), a pressurizing step (step S12), a primary sintering step (step S13), a coolant passage forming step (step S14), and a grinding step (step S15) are performed in that order. In the pulverization/mixing step, cemented carbide base powders are mixed together. In the pressurizing step, the raw material mixed in the pulverization/mixing step is pressurized and a predetermined shape is created. At this time, the body-side joint surface 23 that is substantially V shaped in a side view is formed in the portion that will become the tip 11. In the primary sintering step, primary sintering is performed on shaped product that has been pressurized. In the coolant passage forming step, the two coolant passages 17 and 18 are formed by an electric discharge machine or the like, for example, in the interior of the shaped product on which the primary sintering has been performed. In the grinding step, the spiral discharge groove portions 14 and 15 are ground in the outer peripheral surface of the shaped product on which the primary sintering has been performed. By undergoing the series of these steps, the substantially cylindrical body 10 (refer to Fig. 1 to Fig. 3) is manufactured.

In the head intermediate body manufacturing step, a forming step (step S21) is performed. In the forming step, the PCD sintered body is formed in the substantially cylindrical shape, and the head-side joint surface 33 is formed on a portion that will become the rear end 32. In this way, the substantially cylindrical head intermediate body is manufactured.

Next, a joining step (step S31) is performed. In the joining step, joining of the body 10 and the head intermediate body is performed. Specifically, the head-side joint surface 33 formed on the rear end 32 of the head intermediate body is joined by brazing to the body-side joint surface 23 formed on the tip 11 of the body 10. As described above, the body-side joint surface 23 is the recessed portion that is substantially V shaped in a side view, and the head-side joint surface 33 is a convex portion that protrudes in the substantially reverse V shape in a side view. As a result, the head-side joint surface 33 fits with and is closely adhered to the body-side joint surface 23, and thus, positioning of the head intermediate body with respect to the body 10 is easy. Further, since the head-side joint surface 33 does not rotate in the radial direction with respect to the body-side joint surface 23, positional displacement, in the radial direction, of the head intermediate body with respect to the body 10 can be suppressed.

Note that various methods can be applied for the brazing, but brazing using the silver braze, for example, is preferable. The silver braze is one material used for brazing that is used in joining a metal and a metal, and can be used for almost all metals apart from aluminum and magnesium. Further, the wettability of silver braze is favorable, and the silver braze also has excellent strength, and thus, it offers high versatility. The main component of the silver braze is an alloy base of the three elements of silver, copper, and zinc. Furthermore, a silver braze including elements such as cadmium, nickel, tin, lithium can also be applied. By using the silver braze, as well as the joining being easy, the body-side joint surface 23 and the head-side joint surface 33 can be joined with almost no distortion. Further, by using the silver braze, the bonding layer 60 can be caused to have high strength and high airtightness.

Next, a head grinding step is performed (step S32). In the head grinding step, the spiral discharge groove portions 34 and 35 are ground with respect to the outer peripheral surface of the head intermediate body. Furthermore, the two cutting edges 55 and 56 and the like are ground on the tip 31 of the head intermediate body, and the shape of the leading end is formed. Finally, a head coolant passage forming step (step S33) is performed. In the head coolant passage forming step, the two coolant passages 37 and 38 are formed in the interior of the head intermediate body. The coolant passages 37 and 38 may be formed from the tip 31 of the head intermediate body, for example, using the electric discharge machine, a laser processing machine, or the like.

When forming the coolant passages 37 and 38, an operator views the head intermediate body from the tip 31 side, and checks each of positions of the oil holes 25 and 26 (refer to Fig. 3) provided in the body-side joint surface 23 of the body 10. The oil hole 25 is a reference position when opening the oil hole 46 in the tip 31 and forming the coolant passage 37. The oil hole 26 is a reference position when opening the oil hole 45 in the tip 31 and forming the coolant passage 38. Next, the operator determines each of positions of the oil holes 45 and 46 in the tip 31. The oil hole 45 is a start position when forming the coolant passage 37 from the tip 31. The oil hole 46 is a start position when forming the coolant passage 38 from the tip 31.

The position of the oil hole 45 is determined in the flank 53 (refer to Fig. 5). Furthermore, the position of the oil hole 45 is finally determined such that the minimum distance between the coolant passage 37 formed from the oil hole 45 toward the oil hole 26 (refer to Fig. 3) of the body-side joint surface 23, and the discharge groove portion 34 can be secured. In this way, the wall thickness of the minimum distance between the coolant passage 37 and the discharge groove portion 34 is secured. The oil hole 58 (refer to Fig. 2) that is the inlet of the coolant passage 37 is formed in the head-side joint surface 33 of the rear end 32. The oil hole 58 faces and communicates with the oil hole 26 of the body-side joint surface 23. In this way, the coolant passage 17 on the body 10 side, and the coolant passage 37 on the head 30 side communicate with each other (refer to Fig. 6).

The position of the oil hole 46 is determined in the flank 52 (refer to Fig. 5). Furthermore, the position of the oil hole 46 is finally determined such that the minimum distance between the coolant passage 38 formed from the oil hole 46 toward the oil hole 25 of the body-side joint surface 23, and the discharge groove portion 35 can be secured. In this way, the wall thickness of the minimum distance between the coolant passage 38 and the discharge groove portion 35 is secured. The oil hole 57 (refer to Fig. 2) that is the inlet of the coolant passage 38 is formed in the head-side joint surface 33 of the rear end 32. The oil hole 57 faces and communicates with the oil hole 25 of the body-side joint surface 23. In this way, the coolant passage 18 on the body 10 side, and the coolant passage 38 on the head 30 side communicate with each other (refer to Fig. 6). As a result of the above, the head intermediate body becomes the head 30. The operator can manufacture the drill 1 provided with the PCD head 30 by performing the series of these steps.

The drill 1 manufactured by the above-described steps is provided with the two oil holes 45 and 46 in the tip 31 of the PCD head 30, and can thus efficiently supply the coolant to a cutting region of the work material. Further, in the drill 1, the discharge groove portions 34 and 35 are provided in the outer peripheral surface of the head 30, and thus, the spiral twisting of the discharge groove portions 34 and 35 can be freely designed while taking dischargability of the chips into account. Further, in the drill 1, the head-side joint surface 33 provided on the rear end 32 of the head 30 is joined to the body-side joint surface 23 provided on the tip 11 of the body 10 by brazing. In this way, in the drill 1, the head-side joint surface 33 can be strongly fixed to the body-side joint surface 23 without distortion. Thus, in the drill 1, the head 30 can be strongly fixed to the tip 11 of the body 10 without distortion.

As described above, the drill 1 of the present embodiment is provided with the body 10 and the head 30. The body 10 is a rod shape made of cemented carbide. The head 30 is formed of the polycrystalline diamond, and is joined to the tip 11 of the body 10. The cutting edges 55 and 56 are provided on the tip 31 of the head 30. The discharge groove portions 14, 15, 34, and 35 are provided in the outer peripheral surface of the drill 1. The discharge groove portions 14, 15, 34, and 35 extend in the spiral shape centered on the axis line O from the tip of the drill 1 (the tip 31 of the head 30) toward the side of the rear end of the drill 1 (the rear end 12 of the body 10). The two coolant passages 17 and 18 are provided in the interior of the body 10. The coolant passages 17 and 18 extend in the spiral shape centered on the axis line O from the rear end 12 of the body 10 toward the tip 11. The body-side joint surface 23 is provided on the tip 11 of the body 10. The two oil holes 25 and 26, which are the outlets of the coolant passages 17 and 18, are provided in the body-side joint surface 23. The coolant passages 37 and 38 are provided in the interior of the head 30. The coolant passages 37 and 38 extend from the two oil holes 45 and 46 provided in the tip 31 of the head 30, toward the rear end 32. The head-side joint surface 33 is provided on the rear end 32 of the head 30. The head-side joint surface 33 is joined to the body-side joint surface 23. The oil holes 57 and 58 are provided in the head-side joint surface 33. The oil holes 57 and 58 are the inlets of the coolant passages 37 and 38, and communicate with the oil holes 25 and 26 of the body-side joint surface 23. In this way, the drill 1 can efficiently eject the coolant toward a cutting point of the work material, from the tip 31 of the head 30 formed of the PCD.

The coolant passages 37 and 38 are formed in the straight line inclined with respect to the axis line of the head 30 so as to follow the spiral shape of the discharge groove portions 34 and 35 and such that the minimum distance between the coolant passages 37 and 38 and the discharge groove portions 34 and 35 can be secured. Thus, the drill 1 can secure the wall thickness of the minimum distance between the discharge groove portions 34 and 35 and the coolant passages 37 and 38.

The bonding layer 60 is provided between the body-side joint surface 23 and the head-side joint surface 33. The bonding layer 60 is formed using the silver braze. Thus, the drill 1 can strongly fix the head 30 to the body 10.

The body-side joint surface 23 is formed to be recessed, to the rear end 12 side, in the substantially V shape in a side view. The head-side joint surface 33 is formed protruding in the substantially reverse V shape in a side view. The convex shape of the head-side joint surface 33 fits with and closely adheres to the recessed shape of the body-side joint surface 23. In this way, the head 30 can be more strongly fixed to the body 10. Further, positioning of the head 30 with respect to the body 10 is easy.

In the above description, the drill 1 is an example of a "cutting tool" of the present invention. Each of the discharge groove portions 14, 15, 34, and 35 is an example of a "groove portion" of the present invention. Each of the coolant passages 17 and 18 is an example of a "first coolant passage" of the present invention. Each of the oil holes 25 and 26 is an example of a "first oil hole" of the present invention. Each of the oil holes 45 and 46 is an example of an "opening" of the present invention. Each of the coolant passages 37 and 38 is an example of a "second coolant passage" of the present invention. The body-side joint surface 23 is an example of a "recessed portion" of the present invention. The head-side joint surface 33 is an example of a "convex portion" of the present invention.

Note that the present invention is not limited to the above-described embodiment, and various modifications are possible. The drill 1 of the above-described embodiment is the double-edged drill, but the number of edges is not limited thereto and may be two or more edges. In the present embodiment, the drill 1 is described as an example of a cutting tool of the present invention, but the present invention can also be applied to a tool other than a drill, such as an end mill, a thread mill, a reamer, a cutter, and the like.

In the drill 1 of the above-described embodiment, the two discharge groove portions 14 and 15 (34 and 35) are provided in the outer peripheral surface thereof, but the number of the discharge groove portions may be one, or may be three or more.

The two coolant passages 17 and 18 are provided in the interior of the body 10, and the two coolant passages 37 and 38 are provided in the interior of the head 30. However, the number of the coolant passages may be one, or may be three or more.

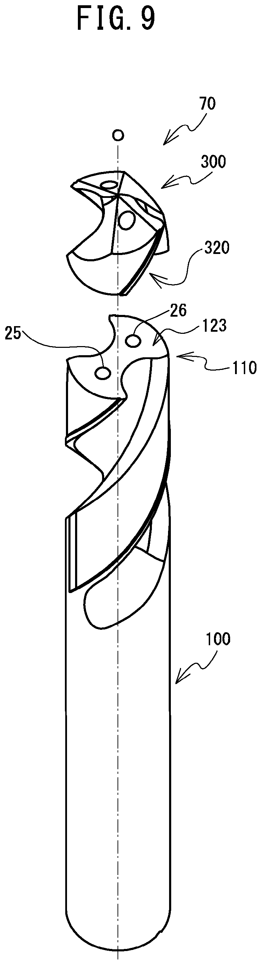

In the above-described embodiment, the entire body-side joint surface 23 is formed as the recessed portion, but a part of the body-side joint surface 23 may be formed as a recessed portion. Further, the entire head-side joint surface 33 is formed as the convex portion, but a part of the head-side joint surface 33 may be formed as a convex portion. For example, a circular hole may be formed in the center of the body-side joint surface 23, and a cylindrical convex portion may be formed in the center of the head-side joint surface 33. Further, the body-side joint surface 23 and the head-side joint surface 33 may have a flat shape. For example, a drill 70 shown in Fig. 9 is provided with a body 100 and a head 300. In place of the body-side joint surface 23 (refer to Fig. 3) of the above-described embodiment, a flat shaped body-side joint surface 123 is formed on a tip 110 of the body 100. In place of the head-side joint surface 33 (refer to Fig. 2) of the above-described embodiment, a flat shaped head-side joint surface (not shown in the drawings) is formed on a rear end 320 of the head 300. Note that a structure other than the body-side joint surface 123 and the head-side joint surface is the same as the structure of the drill 1 of the above-described embodiment, and an explanation thereof is thus omitted.

## Claims

1. A cutting tool including a rod-shaped body which is formed of cemented carbide and a head which is formed of polycrystalline diamond, is joined to the tip of the body, and a tip of which includes a cutting edge, a groove portion extending in a spiral shape centering on an axis line being formed in an outer peripheral surface of the cutting tool, the cutting tool comprising:
a first coolant passage provided in the interior of the body and extending in a spiral shape centering on the axis line from a rear end of the body toward the tip of the body;
a first oil hole provided in a body-side joint surface provided on the tip of the body, the first oil hole being an outlet of the first coolant passage;
a second coolant passage provided in the interior of the head and extending from an opening provided in the tip of the head toward the rear end; and
a second oil hole provided in a head-side joint surface, which is the rear end of the head and which is joined to the body-side joint surface, the second oil hole being an inlet of the second coolant passage, and communicating with the first oil hole of the body-side joint surface.

2. The cutting tool according to claim 1, wherein
the second coolant passage is formed in a straight line inclined with respect to the axis line, so as to follow a twisting direction of the groove portion.

3. The cutting tool according to claim 1 or claim 2, wherein
a bonding layer formed of silver braze is provided between the body-side joint surface and the head-side joint surface.

4. The cutting tool according to any one of claims 1 to 3, wherein
one of the body-side joint surface and the head-side joint surface is provided with a recessed portion recessed to an inner side, and
the other of the body-side joint surface and the head-side joint surface is provided with a convex portion fitting into the recessed portion.
